# EUROPÄISCHE PATENTSCHRIFT

(11) **EP 0 690 635 B1**
(45) Veröffentlichungstag und Bekanntmachung des Hinweises auf die Patenterteilung: **22.10.2003**
(21) Anmeldenummer: 95109561.1
(22) Anmeldetag: 20.06.1995
(51) Int. Cl.: H04Q 3/545

(54) **Verfahren zum Laden von Software in Kommunikationssystemen mit nichtredundanten, dezentralen Einrichtungen**
Method for software charging in communication systems with non-redundant distributed devices
Procédé de chargement de programmes dans des systèmes de communication avec des équipements décentralisés et non-redundants

(30) Priorität: 29.06.1994 DE 4422805
(43) Veröffentlichungstag der Anmeldung: 03.01.1996
(73) Patentinhaber: SIEMENS AKTIENGESELLSCHAFT, 80333 München (DE)
(72) Erfinder: Löbig, Norbert, Dr. rer. nat., D-64291 Darmstadt (DE)

(56) Entgegenhaltungen:
- EP-A- 0 598 526
- KRUITHOF M.: "CALL LOAD SHARING" PROCEEDINGS OF THE NATIONAL ELECTRONICS CONFERENCE, Bd. 32, 16. - 18. Oktober 1978, Seiten 86-88, XP002111472

## Beschreibung

Die Erfindung betrifft ein Verfahren gemäß dem Oberbegriff des Patentanspruchs 1, wie bekannt aus EP 0 598 526.

Die effektive Bearbeitung und Steuerung anstehender Aufgaben wird in zeitgemäßen Kommunikationssystemen durch eine Dezentralisierung von Intelligenzleistung realisiert. Dies bedeutet, daß Programme, die in früheren programmgesteuerten Systemen in der zentralen Steuereinrichtung abgespeichert waren und dort zum Ablauf gelangt sind, einschließlich der zugehörigen Daten zur Peripherie hin verlagert sind und dort unabhängig von der zentralen Steuereinrichtung bearbeitet werden. Dies hat insbesondere den leistungssteigernden Vorteil, daß die zentrale Steuereinrichtung von der Steuerung peripherer Abläufe entlastet wird. Allerdings muß dann die betreffende periphere Software bei Inbetriebnahme des Kommunikationssystems zu jenen peripheren Einrichtungen hin übertragen und dort abgespeichert werden. Dieses Erfordernis besteht insbesondere bei einem Versionswechsel der Software aus Gründen der Fehlerbehebung oder des Einbringens neuer Leistungsmerkmale, gegebenenfalls ebenso nach einem Ausfall bzw. teilweisen Ausfall des Kommunikationssystems.

Da zeitgemäße Kommunikationssysteme ständig um neue Dienste und Leistungsmerkmale erweitert und somit auch die diese steuernden Programme und Daten häufig aktualisiert werden, kommt dem Wechsel der Software von Kommunikationssystemen eine immer größere Bedeutung zu. An ein Kommunikationssystem werden generell andere Anforderungen hinsichtlich der Systemverfügbarkeit gestellt als an viele andere technische Systeme und Anlagen wie beispsielsweise Datenverarbeitungsanlagen.

Insbesondere muß das Kommunikationssystem im Rahmen seiner Kapazitäten auch während des Einbringens einer neuen Software möglichst jederzeit für alle Teilnehmer verfügbar sein, eine Forderung, die indirekt über die Zuverlässigkeitsforderungen von ITU und BELLCORE an Kommunikationssysteme gestellt wird, aber auch direkt von den Betreibergesellschaften vorgebracht wird. Aus Zuverläsigkeitsgründen sind insbesondere die zentralen Einrichtungen des Kommunikationssystems redundant ausgeprägt. Daher besteht ein Kommunikationssystem in der Regel aus mindestens gedoppelten zentralen Einrichtungen, wie zum Beispsiel dem Koppelfeld, den Nachrichtenverteilereinheiten sowie zentralen Steuereinrichtungen. Alle diese Einrichtungen sind Softwaregesteuerte Ein- oder Mehrprozessorsysteme. Bei Inbetriebnahme von Kommunikationssystemen muß die gesamte Systemsoftware sowohl in die zentralen als auch in die peripheren Einrichtungen geladen werden. Das Laden von Software kann aber auch infolge von Fehlerkorrekturen oder der Einbringung neuer Leistungsmerkmale und Dienste in das Kommunikationssystem erforderlich werden. In diesem Fall ist dann im allgemeinen ein Wechsel großer Teile der gesamten Software unumgänglich.

Um dem Erfordernis der Verfügbarkeit des Kommunikationssystems für alle Teilnehmer gerecht zu werden, muß der Wechsel der Software während des laufenden Betriebs erfolgen; dabei müssen dann gegebenenfalls temporäre Verkehrseinschränkungen hingenommen werden, wobei die Nichtverfügbarkeit des Systems für einzelne Teilnehmer oder die Nichterreichbarkeit einzelner Teilnehmer oder Ziele unbedingt vermieden werden muß. Wegen der eingeschränkten Redundanz und der gegebenenfalls unumgänglichen Verkehrseinschränkung ist die für den gesamten Wechsel der Software zur Verfügung stehende Zeit auf wenige Stunden begrenzt, in der Regel wird der Wechsel in Zeiten mit geringer Verkehrslast (zum Beispiel während der Nachtstunden) durchgeführt. Bei ungünstigem Verhältnis von zu ladender Datenmenge und Laderate können aus diesem Grund die peripheren Einrichtungen nicht sukzessive geladen werden, da eine derartige Vorgehensweise unter Umständen mehrere Tage Ladezeit in Anspruch nehmen würde. Um dem Erfordernis des hinreichend schnellen Einbringens der Software gerecht zu werden, wird zum Beispiel jeweils eine Hälfte der peripheren Einrichtungen gleichzeitig geladen; die jeweils andere Hälfte der peripheren Einrichtungen erhält währenddessen den vermittlungstechnischen Betrieb aufrecht. Dies bedeutet in der Praxis eine ca. 50-%ige Verkehrseinschränkung, ein für verkehrsarme Zeiten duchaus tolerierbarer Wert. Beim Wechsel der Software der Kommunikationssysteme lädt die zentrale Steuereinrichtung dann jeweils eine Hälfte der peripheren Einrichtungen mit Programminformation (vermittlungstechnische, betriebstechnische und administrative Programme) sowie mit den der Einrichtung zugehörigen Dateninformationen (Anschlußlage, Signalisierung, Berechtigung, Rufnummern und weitere individuelle Charakteristika von Verbindungsleitungen und Teilnehmeranschlüssen sowie Ausbauzustand und Konfiguration der Einrichtung).

Die in die Peripherie zu ladenden Programm- und Datenmengen sind sehr umfangreich und mit dem Trend zu immer leistungsfähigeren Kommunikationssystemen in starkem Wachstum begriffen. Die zu ladenden peripheren Einrichtungen sind dabei über ein gedoppeltes Nachrichtenverteilersystem mit der zentralen Steuereinrichtung verbunden, welche die gesicherte Übertragung der Ladenachrichten wie auch die Verteilung normaler vermittlungs- und betriebstechnischer Nachrichten vornimmt. Die Ladezeiten werden in erster Linie begrenzt durch die Übertragungsrate des Nachrichtenverteilersystems in Richtung Peripherie, ferner aber auch durch die Performance der zentralen Steuereinrichtung zur Bereitstellung der Ladeinformation und die Übertragungsleistung auf der Schnittstelle zwischen zentraler Steuereinrichtung und Nachrichtenverteilersystem. Während des Ladens der peripheren Einrichtungen oder eines Teils der peripheren Einrichtungen sind die an die betreffenden peripheren Einrichtungen angeschlossenen PCM-Strecken vermittlungstechnisch nicht verfügbar. Insbesondere gilt dies für die PCM30-Strecken eines Ortsvermittlungssystems, welche von ETSI/ITU standardisierte V5.2 Schnittstellen zugeordnet sind.

Für Vermittlungsstellen ohne V5.2 Schnittstellen wurde dieses Problem bisher durch Etablierung eines sogenannten System Split gelöst:
Dies bedeutet die Aufhebung des Redundanzbetriebs aller zentralen Einrichtungen, wodurch zwei nicht redundante Komunikationssysteme entstehen. Zunächst wird dabei der über eine Peripheriehälfte abgewickelte vermittlungstechnische Verkehr ausgedünnt; dies bedeutet, daß Neubelegungen abgewiesen sowie die noch bestehenden Verbindungen abgewickelt werden. Nach einer gewissen Zeit wird dann nur noch ein geringer Teil des ursprünglich über diese Peripheriehälfte abgewickelten Verkehrs von derselben bearbeitet. Nun erfolgt ein Auslösen der noch bestehenden Verbindungen sowie ein Abschalten der der Peripheriehälfte zugehörigen peripheren Einrichtungen. Den beiden Peripheriehälften wird sodann je eine Hälfte der nicht mehr von jetzt an nicht mehr redundant arbeitenden zentralen Einrichtungen zugeordnet. Hierdurch entstehen zwei nicht redundante Kommunikationssysteme mit jeweils der Hälfte der nicht redundanten peripheren Einrichtungen. Damit ist dann der System Split etabliert, wodurch das erste dieser derart entstandenen Kommunikationssysteme mit den noch verbleibenden aktiven peripheren Einrichtungen einen normalen Betrieb mit ca. 50 % Verkehrseinschränkung gewährleistet; dem verbleibenden dieser derart entstandenen zwei Kommunikationssysteme sind genau die abgeschalteten peripheren Einrichtungen zugeordnet. Im folgenden wird dann letzteres mit der neuen Software geladen und der vermittlungstechnische Betrieb durch Wiederinbetriebnahme der nun neu geladenen peripheren Einrichtungen wieder zugelassen. Hiermit wird ein Parallelbetrieb beider Kommunikationssysteme erreicht, wobei eines der Systeme mit der alten Software und das verbleibende System bereits mit der neuen Software gesteuert wird. Im folgenden wird dann das System, das noch mit der alten Software gesteuert wird, nach der gleichen Vorgehensweise, also nach Verkehrsauslösung und Auslösen der Restverbindungen, mit der neuen Software geladen, wie oben geschildert. Eine derartige Vorgehensweise ist allerdings für die oben angesprochene V5.2 Schnittstelle immer noch problematisch. So ist die Methode des Systems Split nicht ohne weiteres auf derartige Schnittstellen anwendbar. Generell gibt es pro PCM30 Strecke einer V5.2 Schnittstelle bis zu drei sogenannte V5.2 Kommunikationskanäle (Communication Channels, CC). Dabei handelt es sich um Übertragungskanäle, über die Signalisierungsdaten, Paketdaten sowie interne Steuerdaten übertragen werden (PSTN Signalisierung, ISDN-Signalisierung, ISDN D-Kanal Paketdaten, sowie Steuerinformation des über die V5.2 Schnittstelle angeschlossenen Teilnehmerkonzentrators (Access Network)). Weitere Einzelheiten bezüglich der V5.2 Schnittstelle sind im Draft prETS-300 347-1 (ETSI Spezifikation V5.2) sowie im Draft prETS-300 347-2 (ETSI Spezifikation V5.2-PICS) aufgezeigt. Die Definition der V5.2 Schnittstelle baut auf und ist in wesentlichen Teilen identisch mit dem Standard der V5.1 Schnittstelle.

Die V5.2 Kommunikationskanäle werden während der Ladezeit der Software in die ihre PCM30 Systeme terminierenden peripheren Einrichtungen nicht bedient und sind somit während dieser Zeit nicht verfügbar. Eine generelle, für die Dauer des Ladevorgangs vorgenommene Ersatzschaltung der V5.2 Kommunikationskanäle der mit der neuen Software zu ladenden Hälfte der peripheren Einrichtungen auf die im Betrieb verbleibende Hälfte der peripheren Einrichtungen ist im allgemeinen nicht möglich. Dies liegt zum einen daran, daß gemäß ETSI/ITU Standard nicht ausreichend viele Kommunikationskanäle als Ersatzkanäle einrichtbar sind. Zum andern können die, verschiedenen V5.2 Kommunikationskanälen zugeordneten Teilnehmer standardgemnäß nur mit erheblichen administrativen Aufwand im Teilnehmeranschlußnetz (AN) und der Ortsvermittlungsstelle (LE) den noch verfügbaren V5.2 Kommunikationskanälen der jeweils in Betrieb verbleibenden Peripheriehälfte zugeordnet werden.

Als alternatives Verfahren zum Laden der neuen Software in die ungedoppelten peripheren Einrichtungen eines Kommunikationssystems ist das Laden von Programmen und Daten der neuen Software in einen insbesondere für den Zweck des Softwarewechsels bereitzustellenden Hintergrundspeicher der zu ladenden peripheren Einrichtungen zu nennen, wobei dieser im laufenden Betrieb unter der Steuerung der alten Software gefüllt wird. Ist dieser Hintergrundspeicher vollständig mit der neuen Softwareversion geladen, erfolgt die Aktivierung der neuen Software, der ein Kopieren der neuen Software in den Arbeitsspeicher vorausgehen kann. Nachteilig an dieser Vorgehensweise ist insbesondere die kurzfristige Nichtverfügbarkeit des gesamten Systems für die Dauer der Aktivierung der neuen Softwareversion. Bei kleinen peripheren Einrichtungen mit nur wenigen PCM Systemen aber relativ umfangreicher Softwareversionen tritt als weiterer, entscheidender Nachteil der Kostengesichtspunkt hervor, da mit diesem Verfahren der periphere Speicherbedarf und das periphere Speicherwachstum für zukünftige Softwaregenerationen verdoppelt wird. In der europäischen Patentanmeldung 93112277.4 ist eine derartige Vorgehensweise vorgeschlagen.

Weiterhin ist aus der deutschen Patentschrift P 43 19 877 ein Verfahren zum Laden von Software zur beschleunigten Inbetriebnahme von peripheren Einrichtungen in Kommunikationssystemen bekannt. Letztere sind allerdings redundant ausgestaltet, weswegen dieses Verfahren auf nichtredundante periphere Einrichtungen nicht anwendbar ist.

Der Erfindung liegt die Aufgabe zugrunde, eine Methode anzugeben, die das Einbringen von Software in die nichtredundant ausgeprägten peripheren Einrichtungen eines Kommunikationssystems derart durchgeführt werden kann, daß die Verfügbarkeit des Systems für die daran angeschlossenen Teilnehmer während des Wechsels der Software sichergestellt ist.

Die Erfindung wird, ausgehend vom Oberbegriff des Patentanspruchs 1 durch die Merkmale des kennzeichnenden Teils gelöst.

Vorteilhaft an der Erfindung ist insbesondere das Umleiten der V5.2 Kommunikationskanäle während des Ladevorgangs der neuen Software in eine Systemhälfte auf die jeweils andere im Betrieb verbleibende Systemhälfte. Ist der Ladevorgang in die eine Systemhälfte abgeschlossen, so geht diese in Betrieb und alle V5.2 Kommunikationskanäle werden nun auf diese Systemhälfte geleitet. Nun kann die neue Software in die verbleibende Systemhälfte geladen werden. Damit ist sichergestellt, daß während des Ladevorgangs einer Systemhälfte in die jeweils verbleibende Systemhälfte alle V5.2 Kommunikationskanäle bedient und damit allen Teilnehmern die Systemverfügbarkeit gewährleistet ist. Mit dieser Vorgehensweise können periphere Einrichtungen mit Software geladen werden, ohne dabei die Verfügbarkeit des Kommunikationssystems für die angeschlossenen Teilnehmer an einschließlich der V5.2 Teilnehmer zu beeinträchtigen.

Weitere Ausgestaltungen der Erfindung sind in den Unteransprüchen angegeben:

Gemäß Anspruch 2 ist vorgesehen, daß die Anzahl der peripheren Einrichtungen geradzahlig ist. Damit ist der Vorteil verbunden, daß es möglich ist, eine hälftige Aufteilung der V5.2 Schnittstellen zugeordneten peripheren Einrichtungen zu finden, wodurch jede V5.2 Schnittstelle jeweils mit ca. 50 % ihrer PCM30 Systeme an einer der so entstandenen Hälften peripherer Einrichtungen angeschlossen ist, womit eine maximale Verkehrseinschränkung von ca. 50 % garantiert werden kann.

Gemäß Anspruch 3 ist vorgesehen, daß das Herstellen eines definierten Anfangszustandes durch Ausdünnen des vermittlungstechnischen Verkehrs erfolgt, indem bestehende Verbindungen für die Dauer ihres Bestehens bearbeitet werden, während neue Verbindungswünsche nur noch über die im Betrieb verbleibende Systemhälfte bearbeitet werden, bis der durch ein bestimmtes Kriterium definierte Anfangszustand erreicht ist. Damit ist der Vorteil verbunden, daß ein darauffolgendes Auslösen der dann noch bestehenden Restverbindungen lediglich den Abbruch einiger, weniger Verbindungen bewirkt, womit ein Retten eines großen Teils aller stabilen Verbindungen i.a. erreicht werden kann.

Gemäß Anspruch 4 ist vorgesehen, daß das bestimmte Kriterium das Erreichen einer vorgegebenen Zeitmarke oder gegebenenfalls eines Schwellenwertes ist. Damit ist der Vorteil verbunden, daß das Ende des Ausdünnungsprozesses durch zwei unabhängige Kriterien vorgebbar ist, welche den Grund des Rettens stabiler Verbindungen definieren.

Gemäß Anspruch 5 ist vorgesehen, daß im Falle des Unterbleibens des Informationsaustausches über Querverbindungen der definierte Zwischenzustand entfällt. Damit ist der Vorteil verbunden, daß im Falle keiner Kommunikationsmöglichkeit zwischen beiden Systemhälften zum einen keine unzulässigen Verkehrseinschränkungen und Teilnehmerausfälle entstehen und zum anderen das Verfahren beschleunigt wird.

Gemäß Anspruch 6 ist vorgesehen, daß im Falle des Bestehens des Informationsaustausches über Querverbindungen der definierte Zwischenzustand durch Ausdünnen des vermittlungstechnischen Verkehrs über die zuletzt mit Software zu versorgende Systemhälfte erfolgt. Damit ist der Vorteil verbunden, daß im Falle einer Querkommunikationsmöglichkeit zwischen beiden Systemhälften das darauffolgende Auslösen der dann noch bestehenden Restverbindungen den Abbruch nur noch einiger, weniger Verbindungen bewirkt, womit ein Retten eines großen Teils aller stabilen Verbindungen i.a. erreicht werden kann.

Gemäß Anspruch 7 ist vorgesehen, daß die bestehenden Verbindungen ohne vorheriges Ausdünnen des vermittlungstechnischen Verkehrs ausgelöst werden.Damit ist der Vorteil einer weiteren Beschleunigung des Verfahrens verbunden.

Gemäß Anspruch 8 ist vorgesehen, daß das Zuführen der Kommunikationskanäle von der einen Systemhälfte zur verbleibenden Systemhälfte über ein, als redundant ausgebildetes Paar zentraler Einrichtungen ausgestaltetes Koppelfeld erfolgt. Damit ist der Vorteil verbunden, daß die Umleitung ohne großen administrativen Aufwand und Hardwareaufwand durchführbar ist.

Gemäß Anspruch 9 ist vorgesehen, daß im Falle des Bestehens einer zusätzlichen Verbindung zwischen jeweils zwei, verschiedenen Systemhälften zugeordneten peripheren Einrichtungen die Kommunikationskanäle direkt über diese zusätzlichen Verbindungen den betreffenden peripheren Einrichtungen zugeführt werden. Damit ist der Vorteil eines noch geringeren Zeitbedarfs verbunden.

Gemäß Anspruch 10 ist vorgesehen, daß das Zuführen der Kommunikationskanäle von der jeweils einen Systemhälfte zu der jeweils verbleibenden Systemhälfte durch wenigstens eine vorgeschaltete Cross-Connect Schaltvorrichtung (z.B. 64 kbit/s) erfolgt. Damit ist der Vorteil der Ausnutzung von unter Umständen sowieso vorhandenen vorgelagerten Einrichtungen des Kommunikationssystems verbunden, was zur weiteren Reduktion des Zeitbedarfs führt.

Gemäß Anspruch 11 ist vorgesehen, daß für lokale Verbindungen zwischen zwei V5.2 Teilnehmern das Auslösen des vermittlungstechnischen Verkehrs entfällt. Damit ist der Vorteil verbunden, daß der Grad des Rettens stabiler Verbindungen über den Wechsel der Software hinaus weiter erhöht wird.

Gemäß Anspruch 12 ist vorgesehen, daß die Protokollabschlußkapazitäten während des abgeschalteten Zustandes der einen bzw. verbleibenden Systemhälfte in einem aktiven Zustand verbleiben. Damit ist der Vorteil verbunden, daß die zu übertragenden Informationen als systeminterne Nachrichten zwischen den den Systemhälften zugeordneten peripheren Einrichtungen übergeben werden können.

Gemäß Anspruch 13 ist vorgesehen, daß die Querkommunikation zwischen den Systemhälften über die Resourcen der Nachrichtenverteilereinheiten oder über zusätzliche Resourcen erfolgen kann. Damit ist der Vorteil verbunden, daß eine Dezentralisierung und damit einhergehend eine Erhöhung der Übertragungsrate zwischen den Systemhälften vorteilhaft erreicht wird.

Gemäß Anspruch 14 ist vorgesehen, daß zur Durchschaltung der Kommunikationskanäle vorbestimmte, in beiden Systemhälften bekannte Zeitlagen bzw. Kanalnummern der benutzten Koppelfeldschnittstelle benutzt werden. Damit ist der Vorteil verbunden, daß eine Querkommunikation zur Vereinbarung dieser Daten zwischen den Systemhälften vorteilhaft entfallen kann.

Gemäß Anspruch 15 ist vorgesehen, daß das Verfahren auch dann Anwendung finden kann, wenn, durch die Architektur des Systems bedingt, die Protokollabschlußkapazitäten für die V 5.2 spezifischen Protokolle zentral vorgehalten werden und nicht Teil der peripheren Einrichtungen sind.

Gemäß Anspruch 16 kann das Verfahren auf die ununterbrochene Bereitstellung des Zugangs zu Paketnetzen für alle angeschlossenen Paketteilnehmer erweitert werden.

Die Erfindung wird im folgenden anhand eines Ausführungsbeispiels näher erläutert.

Es zeigen
- Fig.1: die typische Systemarchitektur eines Vermittlungssystems mit ungedoppelten peripheren Einrichtungen,
- Fig.2: die Struktur des Access Network mit V5.2 Schnittstelle,
- Fig.3: das Beispiel einer V5.2 Schnittstelle an einer Ortsvermittlungsstelle mit ungedoppelten peripheren Einrichtungen mit jeweils vier PCM30 Systemen,
- Fig.4 bis Fig.8: das erfindungsgemäße Verfahren.

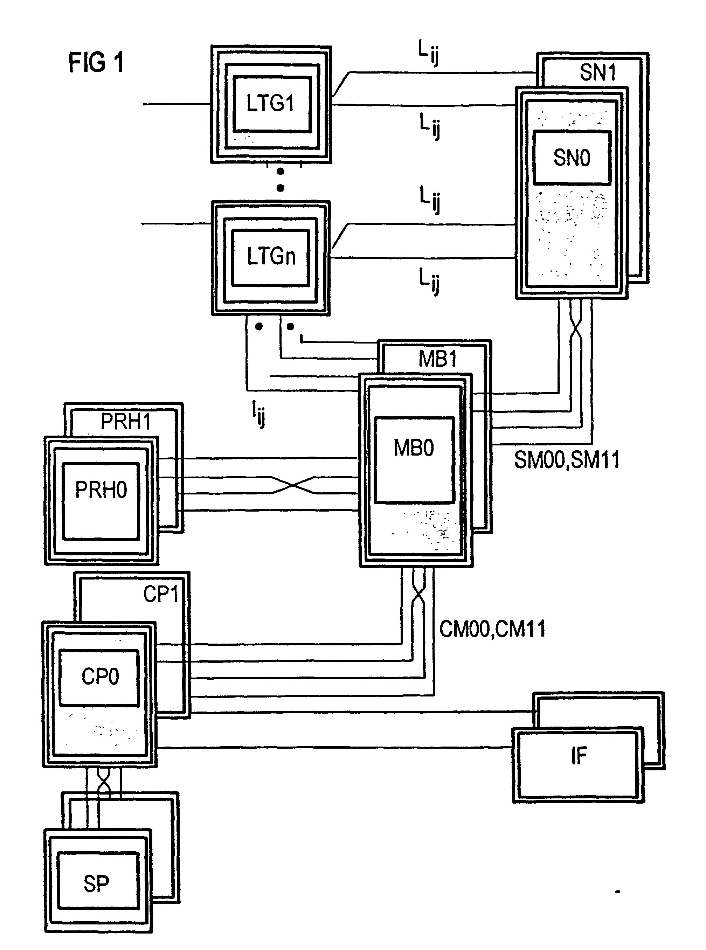

Fig.1 zeigt die typische Systemarchitektur eines Kommunikationssystems mit ungedoppelten peripheren Einrichtungen LTG1 ... LTGn. Sie sind ausgangsseitig mit Teilnehmern bzw. weiteren Kommunikationssystemen verbunden; die von den beiden letzten ausgehenden Informationen werden von den peripheren Einrichtungen LTG1 ... LTGn empfangen und über Verbindungen Lij dem redundant ausgebildeten Koppelfeld SN0, SN1 zugeführt. Weiterhin sind die peripheren Einrichtungen LTG1 ... LTGn über weitere Verbindungen Iij mit den redundant ausgebildeten Nachrichtenverteilereinheiten MB0, MB1 verbunden, die ihrerseits über weitere Verbindungen Iij zum einen mit den redundant ausgebildeten Einrichtungen zur Behandlung zentraler Protokollabschlußaufgaben PRH(z.B. zentraler Zeichenkanal für No.7, Signalisierung, Zugang zu Paketnetzen) und zum anderen mit dem Koppelfeld SN0, SN1 sowie mit der ebenfalls redundant ausgebildeten zentralen Steuereinrichtung CP0, CP1 verbunden sind. Letztere ist an einen gedoppelten Massenspeicher SP angeschlossen. Im weiteren sind an die zentrale Steuereinrichtung CP0, CP1 Interface-Einheiten IF zur Anschaltung von Bedienungselementen bzw. zur Alarmierung vorgesehen. Das Koppelfeld SN0, SN1, die Nachrichtenverteilereinheiten MB0, MB1, die Einrichtungen zur Behandlung zentraler Protokollabschlußaufgaben PRH0, PRH1, die zentrale Steuereinrichtung CP0, CP1 sowie die Massenspeicher SP und die Interface-Einheiten IF sind somit im Kommunikationssystem jeweils gedoppelt vorgesehen. Die peripheren Einrichtungen LTG1 ... LTGn hingegen sind bei vorliegendem Ausführungsbeispiel ungedoppelt.

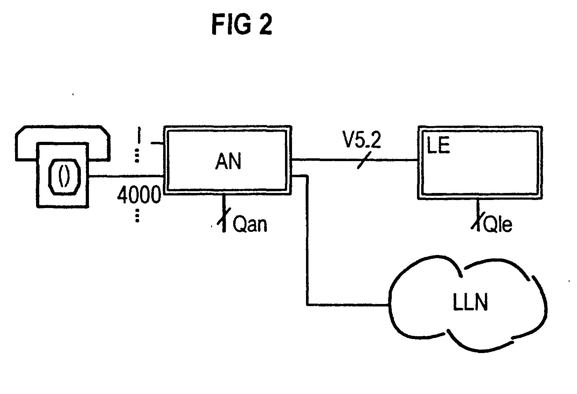

Fig.2 zeigt eine typische Konfiguration, in der ein Access Network AN an eine Kommunikationssystem mit Ortsvermittlungsstellen-Funktion angeschaltet ist. Das Access Network AN weist dabei eine Konzentrationsfunktion auf; bei einer Teilnehmerkonzentration von 8:1 können beisspielsweise bis zu 4000 Teilnehmer an eine V5.2 Schnittstelle eines Access Network AN mit 16 PCM30-Systemen angeschlossen werden. Weiterhin kann das Access Network AN Zugang zu einem Leased Line Network LLN haben und über eine oder mehrere V5.2 Schnittstellen an Kommunikationssysteme mit Ortsvermittlungsstellen-Funktion LE (Local Exchange) angeschlossen sein. Das Kommunikationssystem LE weist eine Schnittstelle Qle sowie das Access Network AN eine Schnittstelle Qan auf. Die Administrierung der V5.2 Schnittstelle und der zugehörigen Teilnehmer erfolgt über die Schnittstellen Qan, Qle funktional getrennt über das Access Network AN sowie das Kommunikationssystem LE; die Administrierung erfolgt hierbei nicht (logisch) über die V5.2 Schnittstelle selbst hinweg. Jede V5.2 Schnittstelle bietet Zugang zum Kommunikationssystem LE über 1 bis 16 PCM30 Verbindungen. Dabei können je PCM30 Verbindung maximal drei physikalische Kommunikationskanäle CC eingerichtet werden, und zwar in Time Slot 15, 16, 31. Ein nicht als Kommunikationskanal CC genutzter Time Slot ist als Bearer Channel verfügbar, insbesondere gilt dies für Time Slot 16.

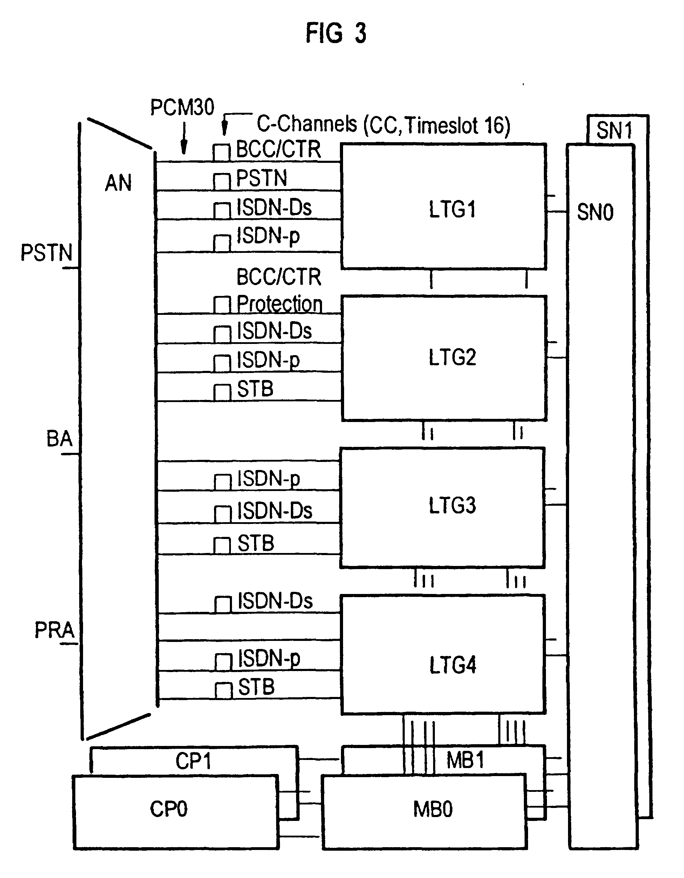

In Fig.3 sind diese Verhältnisse beispielhaft im Kommunikationssystem LE mit ungedoppelten peripheren Einrichtungen LTG1 ... LTG4 zu jeweils vier PCM30 Systemen detailliert aufgezeigt. Dabei sind an das Access Network AN analoge Teilnehmer und Nebenstellen (PSTN-Teilnehmer) sowie digitale Teilnehmer und Nebenstellen (Basic Access BA, Primary Rate Access PRA) angeschlossen. Das Access Network AN ist über jeweils vier PCM30 Systeme an die peripheren Anschlußeinrichtungen LTG1 ... LTG4 angeschlossen. Weiterhin bestehen Verbindungen der peripheren Anschlußeinrichtungen LTG1 ... LTG4 zum Koppelfeld SN0, SN1 sowie den Nachrichtenverteilereinheiten MB0, MB1. Das vermittlungstechnische und betriebstechnische Zusammenwirken der einzelnen Einrichtungen wird von der Steuereinrichtung CP0, CP1 bestimmt. Im Zeitschlitz 16 bestimmter PCM30 Systeme werden die V5.2 spezifischen Protokolle übertragen. Dabei sind beispielsweise zugeordnet:
- BCC/CTR: C-Channel mit BCC, Control und Protection Protokoll
- PSTN: C-Channel mit PSTN Protokoll
- ISDN-P: C-Channel mit ISDN D-Kanal Paketdaten
- ISDN-DS: C-Channel mit ISDN Signalisierungsdaten
- STB: Stand-By C-Channel der Protection Group 2.

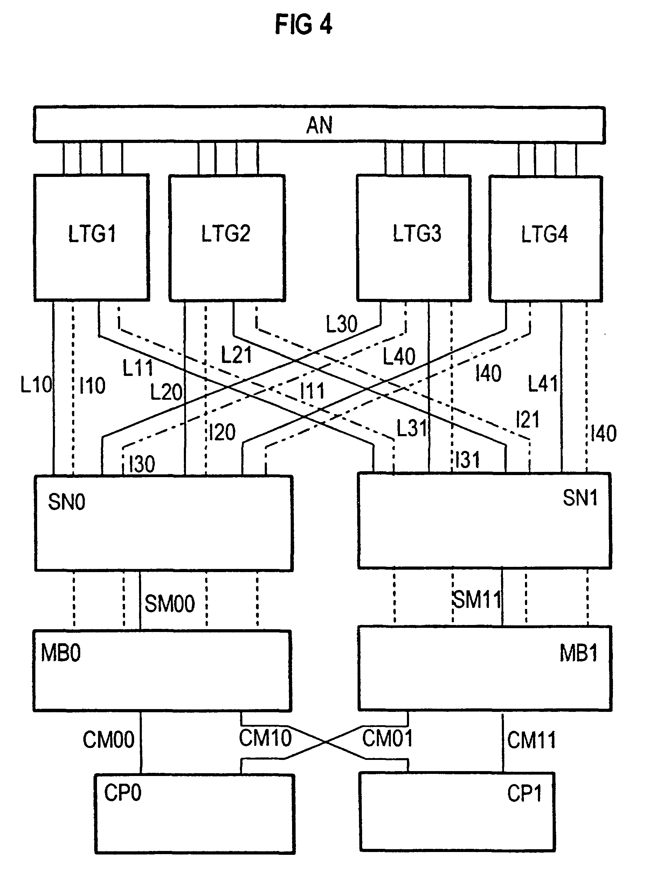

Im folgenden wird der Ablauf des erfindungsgemäßen Verfahrens detailliert beschrieben. Die entsprechenden Verfahrensschritte sind in den Figuren 4 bis 8 aufgezeigt. Fig. 4 zeigt die Verhältnisse der Konfiguration nach Fig.3 als Ausgangszustand vor einem Software-Wechsel. Darin ist das Access Network AN über eine V5.2 Schnittstelle an die peripheren Einrichtungen LTG1 ... LTG4 herangeführt. Dabei werden pro periphere Anschlußeinrichtung LTG1 ... LTG4 jeweils vier PCM30-Systeme (siehe auch Fig.3) für den Anschluß einer V5.2 Schnittstelle mit insgesamt 16 PCM30-Strecken verwendet. Weiterhin sind ein Koppelfeld SN0, SN1, Nachrichtenverteilereinheiten MB0, MB1 sowie eine zentrale Steuereinrichtung CP0, CP1 als zentrale Einrichtung des Kommunikationssystems aufgezeigt, wobei alle letztgenannten Einrichtungen aus Sicherheitsgründen gedoppelt sind. Die periphere Einrichtung LTG3 terminiert das den aktiven BCC/CTR C-Channel der V5.2 Schnittstelle heranführende PCM30 System (Primary Link), weshalb ihr über die Datenbasis die Funktion des V5.2-Masters zugewiesen ist. Dies bedeutet, daß sie alle aktuellen Zustände der V5.2 Schnittstelle führt.

Insbesondere sind hier die Belegungen der Sprachkanäle abgelegt. Die Zuordnung der Access Network Teilnehmer zu den Sprachkanälen wird hier ebenfalls durchgeführt. Die periphere Einrichtung LTG2 terminiert das den Stand-by BCC/CTR C-Channel der V5.2 Schnittstelle heranführende PCM30 System (Secondary Link), weshalb hier aus Ausfallgründen alle Daten der Master-Funktion in hinreichender Redundanz gehalten werden. Im Falle eines Verbindungsaufbaus, ausgehend von einem der V5.2 Schnittstellen Teilnehmer wird die Signalisierungsinformation des Teilnehmers in einem fest zugeordneten Kommunikationskanal CC einer der peripheren Einrichtungen LTG1 ... LTG4 übertragen. Dies kann zum Beispiel die periphere Einrichtung LTG1 sein. Sie ist dann - bedingt durch den Anschluß dieses Teilnehmers - für die Signalisierung des Teilnehmers verantwortlich. Die periphere Einrichtung mit Masterfunktion LTG3 nimmt nun auf Basis einer Verbindung eine Zuordnung der für die Signalisierung verantwortlichen peripheren Einrichtung LTG1 zu einer mit der Durchführung von Vermittlungsaufgaben betrauten peripheren Einrichtung vor. Dies kann zum Beispiel die periphere Einrichtung LTG4 sein. Sie ist dann für den einmaligen Auf- bzw. Abbau dieser Verbindung verantwortlich.

Die über den V5.2 Kommunikationskanal herangeführte Signalisierungsinformation des vorstehend genannten Teilnehmers werden der Protokollabschlußkapazität der peripheren Einrichtung LTG1 zugeführt und dort einer Auswertung unterzogen. Insbesondere wird hier eine Transformation der Signalisierungsinformation in eine systeminterne Nachricht durchgeführt, die dann im folgenden beispielsweise über die Nachrichtenverteilereinheit MB0 der peripheren Einrichtung LTG4 zugeführt wird. Insbesondere ist bei dieser Vorgehensweise die Steuerung der peripheren Einrichtung LTG im Signalisierungsweg mit eingebunden. Dies hat zur Folge, daß im Falle des Ladens von Software in die periphere Einrichtung LTG diese generell - und besonders natürlich für die Weiterleitung der Signalisierungsinformation - nicht zur Verfügung steht.

Weiterhin ist die periphere Einrichtung LTG1 über Verbindungen L10 an die Koppelfeldhälfte SN0 sowie über Verbindung L11 an die redundante Koppelfeldhäflte SN1 herangeführt. Ferner bestehen Verbindungen I10 zwischen der peripheren Einrichtung LTG1 und der Nachrichtenverteilereinheit MB0 und Verbindungen I11 zur Nachrichtenverteilereinheit MB1. In gleicher Weise sind auch die übrigen peripheren Einrichtungen an die zentralen Einrichtungen des Kommunikationssystsems angeschlossen:

So ist beispielsweise die periphere Einrichtung LTG2 über Verbindungen L20 mit der Koppelfeldhälfte SN0 sowie über Verbindungen L21 an die Koppelfeldhälfte SN1 angeschlossen, während zugleich Verbindungen I20 zur Nachrichtenverteilereinheit MB0 sowie Verbindungen I21 zur Nachrichtenverteilereinheit MB1 bestehen. Das Koppelfeld SN0, die Nachrichtenverteilereinheit MB0, die zentrale Protokollabschlußeinrichtung PRH0, sowie die zentrale Steuereinrichtung CP0 definieren im folgenden die Systemhälfte 0, der, wie soeben aufgezeigt - zum Zwecke des Wechsels der Software die peripheren Einrichtungen LTG1, LTG2 zugeordnet sind.

In gleicher Weise sind die peripheren Einrichtungen LTG3, LTG4 an die zentralen Einrichtungen angeschlossen. Erstere ist über Verbindungsleitungen L30, L31 an die Koppelfeldhälfte SN0 bzw. die redundant ausgelegte Koppelfeldhälfte SN1 herangeführt. Weiterhin bestehen Verbindungen I30, I31 zu der Nachrichtenverteilereinheit MB0 bzw. der dazu redundant ausgelegten Nachrichtenverteilereinheit MB1. Die periphere Einrichtung LTG4 ist über Verbindungen L40, L41 an die Koppelfeldhälfte SN0 bzw. die redundant ausgelegte Koppelfeldhälfte SN1 angeschlossen sowie über Verbindungen I40, I41 an die Nachrichtenverteilereinheit MB0 bzw. die redundante Nachrichtenverteilereinheit MB1. Die Koppelfeldhälfte SN1, die Nachrichtenverteilereinheit MB1, die zentrale Protokollabschlußeinrichtung PRH1 sowie die zentrale Steuereinrichtung CP1 definieren im folgenden die Systemhälfte 1, der - wie ebenfalls aufgezeigt - zum Zwecke des Wechsels der Software die peripheren Einrichtungen LTG3, LTG4 zugeordnet sind. Weiterhin ist die Koppelfeldhälfte SN0 über Verbindungen SM00 mit der Nachrichtenverteilereinheit MB0 in gleicher Weise verbunden wie die Koppelfeldhälfte SN1 über Verbindungen SM11 mit der Nachrichtenverteilereinheit MB1. Die Nachrichtenverteilereinheiten MB0, MB1 sind ihrerseits wie in Fig.4 aufgezeigt mit der zentralen Steuereinrichtung CP0, CP1 über Verbindungen CM00 und CM11 verbunden. Gleichzeitig besteht eine Auskreuzung zwischen den Nachrichtenverteilereinheiten MB0, MB1 sowie der zentralen Steuereinrichtung CP0, CP1 über Verbindungen CM10, CM01.

Fig.4 zeigt eine Konfiguration, wie sie sich unmittelbar vor dem Software-Wechsel darstellt. In diesem Fall werden ca. 50 % des Verkehrs sowie bei gleichmäßiger Verteilung der Signalisierung auf die peripheren Einrichtungen LTG ca. 50 % der Signalisierung über die Peripheriehälfte 0 abgewickelt. Ebenso werden ca. 50 % des Verkehrs sowie 50 % der Signalisierung über die Peripheriehälfte 1 abgewickelt. Vor dem Wechsel der Software herrscht der redundante Normalbetriebsmodus des Kommunikationssystems, das heißt i.a. werden beide Koppelfeldhälften SN0, SN1 für jede Verbindung durchgeschaltet sein, die Einrichtungen MB0, MB1, PRH0, PRH1 sowie CP0 und CP1 arbeiten in ihrem redundanten Betrieb, zum Beispiel aktiv/stand by oder load sharing.

Zunächst soll davon ausgegangen werden, daß keine Möglichkeit der Querkommunikation zwischen den beiden Systemhälften 0,1 gegeben ist. Weiterhin soll davon ausgegangen werden, daß zunächst die, der Systemhälfte 0 zugehörigen peripheren Einrichtungen also die peripheren Einrichtungen LTG1, LTG2 mit einer neuen Software geladen werden sollen. In diesem Fall wird zunächst im redundanten Normalbetriebsmodus der über die peripheren Einrichtungen LTG1, LTG2 geführte Verkehr ausgedünnt. Dies bedeutet, daß zwar bestehende Verbindungen noch zugelassen und bearbeitet werden, neue Verbindungen aber über diese Peripheriehälfte nicht mehr zugelassen werden. Nach einer gewissen Zeit wird dann über die Peripheriehälfte 0 nur noch ein geringer Teil des Gesamtverkehrs abgewickelt, zum Beispiel 3 % des Verkehrs. Die Peripheriehälfte 1 stellt weiterhin ca. 50 % der Verkehrskapazität des normalen Bestriebszustandes zur Verfügung. Die Wartezeit zur Verkehrsausdünnung kann gegebenenfalls vorab eingestellt werden. Eine weitere Ausgestaltung der Erfindung besteht darin, einen ebenfalls vorab definierten Schwellenwert zuzulassen. Ist dieser erreicht, gilt damit der 'Ausdünnugnsprozeß' ebenfalls als abgeschlossen, womit in beiden Fällen dann ein definierter Anfangszustand hergestellt ist. In einer weiteren Ausgestaltung der Erfindung kann der Ausdünnungsprozeß zur Beschleunigung des Verfahrens zum Wechsel der Software unterbleiben.

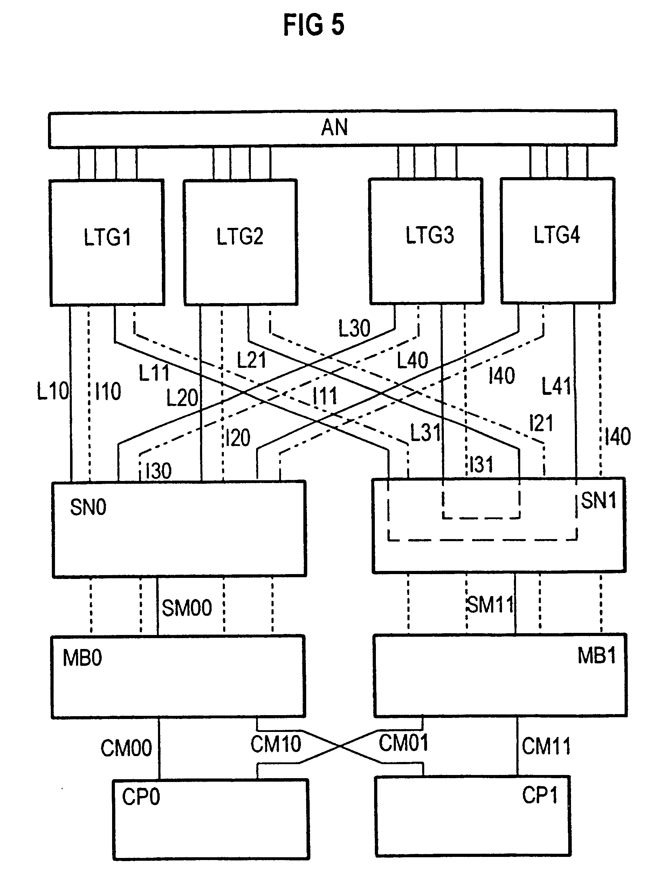

Im folgenden werden die Kommunikationskanäle CC der Peripheriehälfte 0 auf die Peripheriehälfte 1 umgeschaltet. Die betreffenden Verhältnisse zeigt Fig.5. Dabei werden die über die Schntitstelle V5.2 ankommenden Kommunikationskanäle CC in den peripheren Einrichtungen LTG1, LTG2 in Sprachkanäle eingefügt und dann zur Koppelfeldhälfte SN1 hin über die Verbindungen L11, L21 übertragen. Dort werden die betreffenden Kommunikationskanäle CC zu den peripheren Einrichtungen LTG3, LTG4 über Verbindungen L41, L31 geschaltet. In den dort vorgesehenen Protokollabschlußeinrichtungen werden die Kommunikationskanäle damit so behandelt, als würden sie über die angeschlossenen V5.2 Schnittstelle zugeführt werden. Werden die für die Durchschaltung notwendigen Sprachkanäle auf den Verbindungsleitungen L11, L21, L31, L41 noch vermittlungstechnisch genutzt, so erfolgt ein Auslösen der betreffenden Verbindungen vor dem Umschalten der Kommunikationskanäle CC.

Der noch von der Peripheriehälfte 0 abgewickelte vermittlungstechnische Restverkehr wird nun ausgelöst, die peripheren Einrichtungen der Systemseite 0 werden dann abgeschaltet, demzufolge wird kein vermittlungstechnischer Verkehr hierüber mehr abgewickelt. In einer weiteren Ausgestaltung der Erfindung kann das Ausdünnen des Verkehrs zur Beschleunigung des Verfahrens zum Wechseln der Software unterbleiben und die Auslösung unmittelbar erfolgen. Ferner kann in einer weiteren Ausgestaltung der Erfindung das Auslösen des über die peripheren Einrichtungen der Systemseite 0 geführten Verkehrs auch vor dem Umschalten der Kommunikationskanäle CC der Peripheriehälfte 0 auf die Peripheriehälfte 1 erfolgen. Die peripheren Einrichtungen LTG1, LTG2 weisen nun den inaktiven Zustand auf, wobei die Durchschaltung der Kommunikationskanäle CC auf die verbleibende Systemseite 1 jedoch erhalten bleibt. Ferner ist die alte Software noch in den Speichern der peripheren Einrichtung LTG1, LTG2 geladen. Nun erfolgt die Abschaltung der Koppelfeldhälfte SN0, der Nachrichtenverteilereinheit MB0, der Protokollabschlußeinheit PRH0 und der zentralen Steuereinrichtung CP0. Damit sind die Auskreuzungsverbindungen CM10, CM01 sowie die Verbindungen I11, I21 aktiv geschaltet. Mit den peripheren Einrichtungen LTG1, LTG2 sind auch die zugehörigen Protokollabschlußkapazitäten inaktiv. Daher wird die in den Kommunikationskanälen PC übertragene Signalisierungsinformation nicht bearbeitet sondern lediglich transparent zum Koppelfeld SN1 durchgereicht.

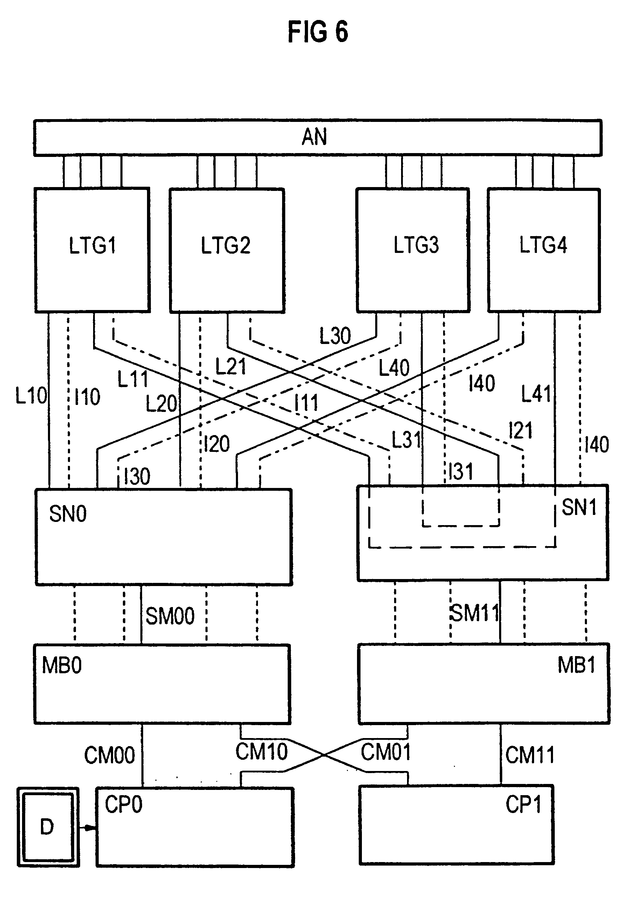

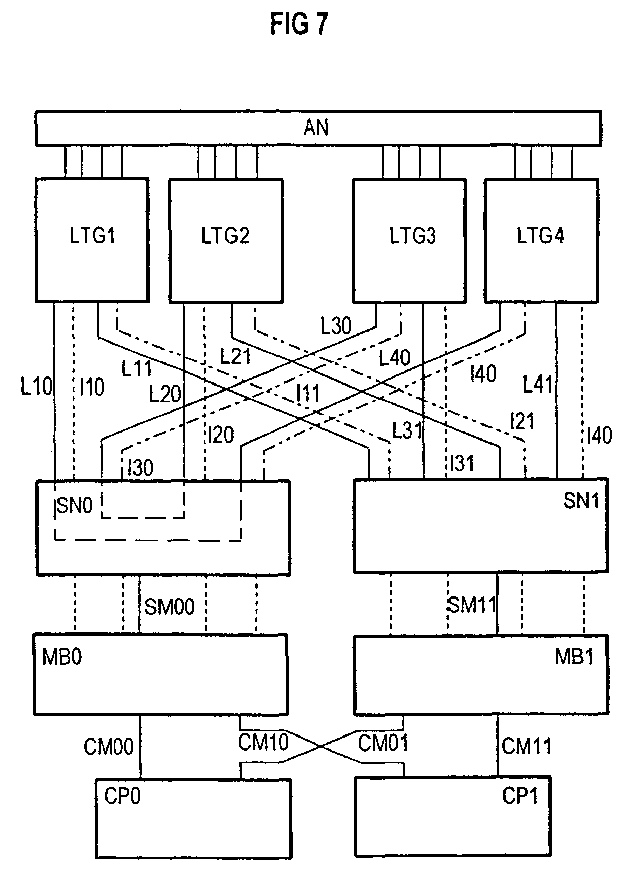

In diesem Konfigurationszustand kann neue Software in die peripheren Einrichtungen LTG1, LTG2 geladen werden. Die entsprechenden Verhältnisse sind in Fig.6 dargestellt. Zu diesem Zweck ist die zentrale Steuereinrichtung CP0 der Systemhälfte 0 an ein externes Speichermedium SP, das als Diskettenlaufwerk ausgestaltet sein kann, angeschlossen. Wahlweise können auch andere Speichermedien verwendet werden. Die zu ladende Software wird dem Diskettenlaufwerk D entnommen und der zentralen Steuereinrichtung CP0 zugeführt. Von dort erfolgt die Übertragung über die Verbindungen CM00, SM00 sowie I10 bzw. I20 in die Speicher der peripheren Einrichtungen LTG1, LTG2. Während des Ladens der Software in die Systemhälfte 0 wird der vermittlungstechnische Verkehr mit ca. 50 % der Verkehrskapazität des normalen Betriebszustandes aufrecht erhalten. Dies erfolgt allerdings unter Verwendung der alten Software, die noch in den Speichern der peripheren Einrichtungen LTG3, LTG4 vorhanden ist. Vor bzw. im Rahmen des Ladens der peripheren Einrichtungen LTG1, LTG2 können die ladbaren Softwareanteile der Einrichtungen PRH0, SN0, MB0 und insbesondere CP0 vorteilhaft ebenfalls mit einem neuen zugehörigen Softwarestand geladen werden. Im folgenden wird nun die Umleitung der über die Systemhälfte 1 umgeleiteten Kommunikationskanäle CC der Systemhälfte 0 wieder zurückgeschaltet. Damit steht die Systemhälfte 0 prinzipiell für vermittlungstechnischen Verkehr wieder voll zur Verfügung, womit ein Zwischenzustand erreicht ist, der im Prinzip dem in Fig.4 aufgezeigten definierten Anfangszustand entspricht, indem der Verkehr über beide Peripheriehälften zu jeweils 50 % abgewickelt werden kann. Der wesentliche Unterschied zu der in Fig.4 aufgezeigten Konfiguration besteht darin, daß hier kein vermittlungstechnischer Verkehr über die Systemhälfte 0 abgewickelt werden kann, da die Masterfunktion der V 5.2 Schnittstelle sich nach wie vor auf der Systemseite 1 befindet. Mithin bilden die Systemseite 0 und die Systemseite 1 zwei konkurrierende Systeme, von denen die Systemseite 1 vermittlungstechnisch aktiv sein kann, da nur von hier aus die Steuerung des Access Network AN vorgenommen werden kann. Die Systemseite 0 kann in diesem Zustand nur dann zugleich vermittlungstechnisch aktiv sein, wenn eine Querkommunikationsmöglichkeit zwischen den Systemhälften vorhanden ist, womit die Systemhälfte 0 Zugriff auf die V5.2 Schnittstellensteuerung etwa zur Zuordnung von Sprachkanälen auf der V5.2 Schnittstelle hätte. Nur bei Vorhandensein dieser Querkommunikationsmöglichkeit ist der Parallelbetrieb von Systsemhälfte 0 mit der neuen Softwareversion und Systemhälfte 1 mit der alten Softwareversion möglich, welcher vorteilhaft für das Ausdünnen des Verkehrs über die Systemhälfte 1 genutzt werden kann. Falls keine Querkommunikationsmöglichkeit gegeben ist, entfällt dieser Zwischenzustand. Anschließend wird die Systemhälfte 1 mit der neuen Software geladen. Zu diesem Zweck werden die Kommunikationskanäle CC der Systemhälfte 1 auf die Systemhälfte 0 - wie in Fig. 7 aufgezeigt - umgeschaltet. Dabei werden die über die Schnittstelle V5.2 ankommenden Kommunikationskanäle CC in den peripheren Einrichtungen LTG3, LTG4 in Sprachkanäle eingefügt und dann zur Koppelfeldhälfte SN0 hin über die Verbindungen L30, L40 übertragen. Dort werden die betreffenden Kommunikationskanäle CC zu den peripheren Einrichtungen LTG1, LTG2 über Verbindungen L10, L20 geschaltet. In den dort vorgesehenen Protökollabschlußeinrichtungen werden die Kommunikationskanäle CC damit so behandelt, als würden sie über die angeschlossene V5.2 Schnittstelle zugeführt werden.

Die noch auf der Systemseite 1 bestehenden Verbindungen werden nun auf der Systemseite 1 ausgelöst. Da die Systemseite 1 mit dem Umschalten der Kommunikationskanäle auf die Systemseite 0 keinen Zugriff mehr auf die V5.2 Schnittstelle besitzt, erfolgt das Auslösen der über die Systemseite 1 geführten Verbindungen Access Network seitig unter der Steuerung der Systemseite 0. Diese existiert in Abhängigkeit von dem Vorhandensein einer Querkommunikationsmöglichkeit einer gezielten oder einer ungezielten Freigabe der zugehörigen Sprachkanäle. Die Systemseite 1 wird dann abgeschaltet, demzufolge wird kein vermittlungstechnischer Verkehr hierüber mehr abgewickelt. Die peripheren Einrichtungen LTG3, LTG4 weisen nun einen inaktiven Zustand auf, wobei die Durchschaltung der Kommunikationskanäle auf die verbleibende Systemseite jedoch erhalten bleibt. Ferner ist die alte Software noch in den Speichern der peripheren Einrichtungen LTG3, LTG4 geladen. Die Auskreuzungsverbindungen CM10, CM01 sowie die Verbindungen I40, I30 sind weiterhin inaktiv geschaltet. Mit den peripheren Einrichtungen LTG3, LTG4 sind auch die zugehörigen Protokollabschlußkapazitäten inaktiv. Daher wird die in den Kommunikationskanälen CC übertragene Signalisierungsinformation nicht bearbeitet, sondern lediglich transparent zum Koppelfeld SN0 durchgeschaltet.

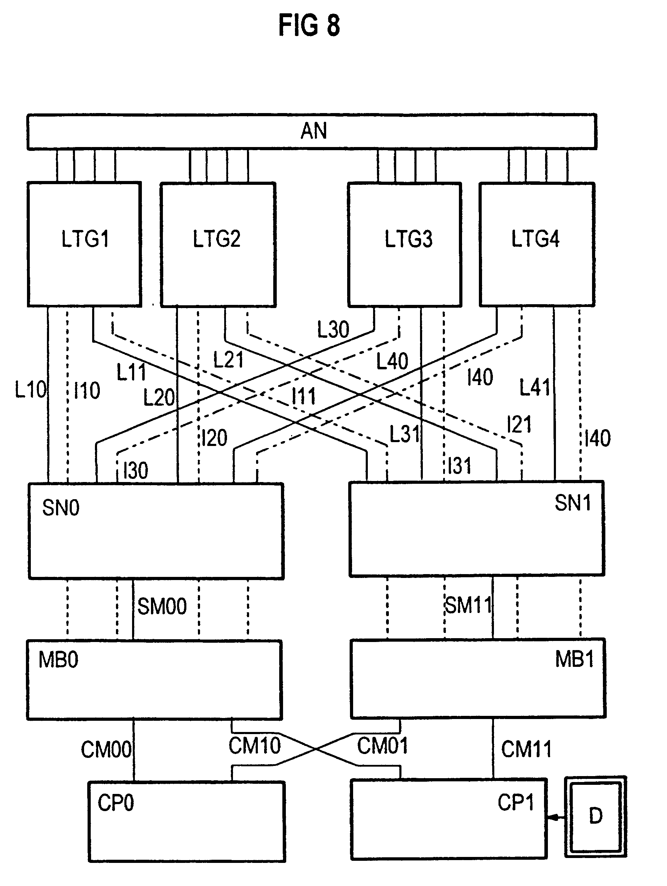

In diesem Konfigurationszustand kann neue Software in die peripheren Einrichtungen LTG3, LTG4 geladen werden. Die entsprechenden Verhältnisse sind in Fig.8 dargestellt. Zu diesem Zweck ist die zentrale Seuereinrichtung CP1 der Systemhälfte 1 an externes Speichermedium SP, das ebenfalls als Diskettenlaufwerk D ausgestaltet sein kann angeschlossen. Wahlweise können auch hier andere Speichermedien verwendet werden. Die zu ladende Software wird dem Diskettenlaufwerk D entnommen und der zentralen Steuereinrichtung CP1 zugeführt. Von dort erfolgt die Übertragung der Software über die Verbindungen CM11, SM11 sowie I31 bzw. I41 in die Speicher der peripheren Einrichtungen LTG3, LTG4. Während des Ladens der Software in die Systemhälfte 1 wird der vermittlungstechnische Verkehr mit ca. 50 % der Verkehrskapazität des normalen Betriebszustandes über die Systemhälfte 0 aufrechterhalten. Dies erfolgt bereits mit der neuen Software, die bereits in die Speicher der peripheren Einrichtungen LTG1, LTG2 geladen ist. Vor bzw. im Rahmen des Ladens der peripheren Einrichtungen LTG3, LTG4 können die ladbaren Softwareanteile der Einrichtungen PRH1, SN1, MB1 und insbesondere CP1 vorteilhaft ebenfalls mit einem neuen Softwarestand geladen werden.

Im folgenden werden nun die zentralen, unter Umständen ebenfalls mit neuer Software versorgten zentralen Einrichtungen SN1, MB1, PRH1, CP1 abgeschaltet und die peripheren Einrichtungen LTG3, LTG4 der Systemseite 0 zugeschaltet. Hiermit bietet die Systemseite 0 mit der vollen Peripheriegesamtheit LTG1 ... LTG4 vermittlungstechnischen Verkehr über alle V5.2 Schnittstellen an. Sodann wird die Umleitung der über die Systemhälfte 0 umgeleiteten Kommunikationskanäle CC der Peripheriehälfte 1 wieder aufgehoben. Damit steht die gesamte Systemperipherie dem vermittlungstechnischen Verkehr ohne Umschalten der Kommunikationskanäle wieder voll zur Verfügung. Abschließend wird der redundante Betrieb durch Zuschalten der zentralen Komponenten SN1, MB1, PRH1 und CP1 wieder hergestellt. Das Ende des Wechsels der Software ist erreicht, die normale Betriebssituation ist wieder hergestellt.

In einer weiteren Ausgestaltung der Erfindung wird davon ausgegangen, daß eine Querkommunikation zwischen den beiden Systemhälften 0 und 1 über die Auskreuzungsverbindungen CM10, CM01 erfolgt. In diesem Fall kann der vorstehend aufgezeigte Zwischenzustand dahingehend ausgestaltet werden, daß der Ausdünnungsprozeß auch auf die Systemseite 1 angewandt wird. Außerdem sind bei der Übergabe der, die aktuellen Kommunikationskanäle CC bestreffenden Konfigurationsdaten der mit der alten Software betriebenen Systemhälfte zu der Systemhälfte, die mit der neuen Software bestrieben wird, dann keinerlei Ersatzschaltungen von V5.2 Kommunikationskanälen auf der V5.2 Schnittstelle mehr nötig. In diesem Fall ist sogar ein Parallelbetrieb von alter und neuer Software möglich. Außerdem können stabile Verbindungen zwischen Teilnehmern, die über eine V5.2 Schnittstelle an der gleichen Ortsvermittlungsanlage angeschlossen sind, gerettet werden.

In einer weiteren Ausgestaltung der Erfindung können zusätzlich Verbindungen zwischen zwei, jeweils einer Systemhälfte zugeordneten peripheren Einrichtungen vorgesehen werden. Dies können beispielsweise Verbindungen zwischen den peripheren Einrichtungen LTG1, LTG4 sein. In diesem Fall können dann die Kommunikationskanäle CC direkt darüber von zum Beispiel der peripheren Einrichtung LTG2 der peripheren Einrichtung LTG4 zugeführt werden.

Weiterhin kann das Umleiten der Kommunikationskanäle CC einem vorgeschalteten Cross-Connect-System auf Basis von 64 kBit/s Kanäle erfolgen.

In einer weiteren Ausgestaltung der Erfindung werden die Protokollabschlußkapazitäten im aktiven Zustand beibehalten. Damit können dann die Informationen über andere Ausgänge anderen peripheren Einrichtungen übergeben werden. Damit können dann die V5.2 spezifischen Protokolle in den die zugehörigen PCM30 Strecken terminierenden peripheren Einrichtungen abgeschlossen werden, wodurch die Weiterleitung der in den Komunikationskanälen CC herangeführten Signalisierung und ISDN D-Kanalpaketdaten als systeminterne Nachrichtenen an die jeweils in Betrieb verbleibende Systemhälfte erfolgen kann.

In einer weiteren Ausgestaltung der Erfindung kann als Basis der Querkommunikation zwischen den Systemhälften anstatt der zentralen Querverbindung CM10, CM01 die jeweils in Betrieb verbleibende Nachrichtenverteilereinheit oder zwischen jeweils zwei peripheren Einrichtungen beider Peripheriehälften zusätzlich eingefügte physikalische Verbindungen Verwendung finden.

In einer weiteren Ausgestaltung der Erfindung kann die Zeitlage bzw. Kanalnummer, welche zur Durchschaltung der Kommunikationskanäle CC verwendet wird, aus der Anschlußlage und Zeitschlitznummer der Kommunikationskanäle eindeutig bekannt werden, womit eine Querkommunikations zur Übergabe der Zeitlage bzw. Kanalnummer zwischen den Systemhälften entfällt.

In einer weiteren Ausgestaltung der Erfindung können die Kommunikationskanäle CC auch auf zentrale Protokollabschlußkapazitäten geführt sein, wie es in Systemarchitekturen mit größerer Flexibilität vorkommen kann.

In einer weiteren Ausgestaltung der Erfindung kann durch Anwendung des Verfahrens der Bezug aller ISDN-Paketteilnehmer zu allen ihm im normalen Betrieb zugänglichen Paketnetzen für die volle Dauer des Softwarewechsels insbesondere für die Dauer des nicht redundanten Betriebs erhalten werden.

## Patentansprüche

1. Verfahren zum Laden von Software in ein Kommunikationssystem mit wenigstens zwei Paaren von zentralen, einander zugeordneten, redundant ausgebildeten Einrichtungen (CP0, CP1; MB0, MB1; SN0, SN1; PRH0, PRH1), die jeweils eine Systemhälfte (SN0, MB0, CP0, PRH0) sowie die dazu redundant ausgebildete Systemhälfte (SN1, MB1, CP1, PRH1) definieren und die über Querverbindungen (CM10, CM01) gegebenenfalls Informationen austauschen sowie mit einer Mehrzahl (n) von der einen oder verbleibenden Systemhälfte zugeordneten peripheren Einrichtungen (LTG1 ... LTGn), die mit jeder der zentralen, redundant ausgebildeten Einrichtungen (SN0, SN1; MB0, MB1) von wenigstens einem Paar von zentralen Einrichtungen über periphere Verbindungen (Lij, Iij) verbunden sind, wobei wenigstens eine der peripheren Einrichtungen (LTG1 ... LTGn) an eine genormte Schnittstelle, insbesondere eine V5.2 Schnittstelle angeschlossen ist, über die vermittlungstechnischer Verkehr in Nachrichtenkanälen und Kommunikationskanälen (CC) der ersten oder zweiten Systemhälfte zugeführt wird,
**dadurch gekennzeichnet,**
**daß** nach Erreichen eines definierten Anfangszustandes in einem ersten Verfahrensschritt die über der einen Systemhälfte zugeordneten, peripheren Einrichtungen (LTG1 ... LTGm; LTGm+1 ... LTGn) geführten, in Kommunikationskanälen (CC) übertragenen Signalisierungs- und/oder Informationssignale in die Nachrichtenkanäle eingefügt und über erste der peripheren Verbindungen (Lij) der verbleibenden Systemhälfte zugeführt werden, wo sie zu wenigstens einer der verbleibenden Systemhälfte zugeordneten peripheren Einrichtung (LTGm+1 ... LTGn) über zweite der peripheren Verbindungen (Lij) weitergeleitet werden,
**daß** in einem zweiten Verfahrensschritt der noch von der einen Systemhälfte abgewickelte vermittlungstechnische Verkehr gegebenenfalls ausgelöst wird,
**daß** in einem dritten Verfahrensschritt die Software in die betreffende eine Systemhälfte und die dieser zugeordneten peripheren Einrichtungen (LTG1 ... LTGm) geladen wird,
**daß** in einem vierten Verfahrensschritt das Zuführen der in Nachrichtenkanälen eingefügten, in Kommunikationskanäle (CC) übertragenen Signalisierungs- und/oder Informationssignale in die verbleibende Systemhälfte wieder rückgängig gemacht wird, womit ein definierter Zwischenzustand erreicht wird, und
**daß** im Anschluß daran die Verfahrensschritte 1 bis 4 auf die verbleibende Systemhälfte sowie die dieser zugeordneten peripheren Einrichtungen (LTGm+1 ... LTGn) in gleicher Weise Anwendung finden wie zuvor auf die betreffende eine Systemhälfte sowie die dieser zugeordneten peripheren Einrichtungen (LTG1 ... LTGm), wobei der definierte Zwischenzustand entfällt, bis die Software entsprechend auch in die, der verbleibenden Systemhälfte zugeordnete peripheren Einrichtungen (LTGm+1 ... LTGn) geladen ist, und
**daß** abschließend der redundante Betrieb wieder hergestellt wird.

2. Verfahren nach Anspruch 1,
**dadurch gekennzeichnet,**
**daß** die Anzahl der peripheren Einrichtungen (n) geradzahlig ist.

3. Verfahren nach Anspruch 1 oder 2,
**dadurch gekennzeichnet,**
**daß** das Herstellen eines definierten Anfangszustandes durch Ausdünnen des vermittlungstechnischen Verkehrs erfolgt, indem bestehende Verbindungen für die Dauer ihres Bestehens bearbeitet werden, während neue Verbindungswünsche abgewiesen werden, bis der durch ein bestimmtes Kriterium definierte Anfangszustand erreicht ist.

4. Verfahren nach Anspruch 3,
**dadurch gekennzeichnet,**
**daß** das bestimmte Kriterium das Erreichen einer vorgegebenen Zeitmarke oder gegebenenfalls eines Schwellenwertes ist.

5. Verfahren nach einem der Ansprüche 1 bis 4,
**dadurch gekennzeichnet,**
**daß** im Falle des Unterbleibens des Informationsaustausches über die Querverbindungen (CM10, CM01) der definierte Zwischenzustand entfällt.

6. Verfahren nach einem der Ansprüche 1 bis 4,
**dadurch gekennzeichnet,**
**daß** im Falle des Bestehens des Informationsaustauches über die Querverbindungen (CM10, CM01) der definierte Zwischenzustand durch Ausdünnung des vermittlungstechnischen Verkehrs bestimmt ist.

7. Verfahren nach einem der vorstehenden Ansprüche,
**dadurch gekennzeichnet,**
**daß** die bestehenden Verbindungen ohne vorheriges Ausdünnen des vermittlungstechnischen Verkehrs ausgelöst werden.

8. Verfahren nach einem der vorstehenden Ansprüche,
**dadurch gekennzeichnet,**
**daß** das Zuführen der Kommunikationskanäle (CC) von der einen Systemhälfte zu der verbleibenden Systemhälfte über ein als redundant ausgebildetes Paar zentraler Einrichtungen ausgestaltetes Koppelfeld (SN0, SN1) erfolgt.

9. Verfahren nach einem der vorstehenden Ansprüche,
**dadurch gekennzeichnet,**
**daß** im Falle des Bestehens einer zusätzlichen Verbindung zwischen jeweils zwei, verschiedenen Systemhälften zugeordneten peripheren Einrichtungen (LTGx, LTGy; 1>x>m, m+1>y>n) die Kommunikationskanäle (CC) direkt über diese zusätzlichen Verbindungen den betreffenden peripheren Einrichtungen geführt werden.

10. Verfahren nach einem der vorstehenden Ansprüche,
**dadurch gekennzeichnet,**
**daß** das Zuführen der Kommunikationskanäle (CC) von der jeweils einen Systemhälfte zu der jeweils verbleibenden Systemhälfte durch wenigstens eine vorgeschaltete Cross-Connect Schaltvorrichtung erfolgt.

11. Verfahren nach einem der vorstehenden Ansprüche,
**dadurch gekennzeichnet,**
**daß** für lokale Verbindungen zwischen zwei V5.2 Teilnehmern das Auslösen des vermittlungstechnischen Verkehrs entfällt.

12. Verfahren nach einem der vorstehenden Ansprüche,
**dadurch gekennzeichnet,**
**daß** die Protokollabschlußkapazität während des abgeschalteten Zustandes der einen bzw. verbleibenden Sysemhälfte in einem aktiven Zustand verbleiben.

13. Verfahren nach einem der vorstehenden Ansprüche,
**dadurch gekennzeichnet,**
**daß** im Falle des Bestehens des Informationsaustauschs zwischen den Systemhälften dieser nicht über die Querverbindungen (CM10, CM01) erfolgt, sondern zwischen jeweils zwei, verschiedenen Systemhälften zugeordneten peripheren Einrichtungen (LTGx, LTGy; 1>x>m, m+1>y>n) über die jeweils in Betrieb befindlichen Nachrichtenverteilereinheit (MB0, MB1) oder über die zusätzlichen Verbindungen zwischen den peripheren Einrichtungen beider Peripheriehälften (LTG1 ... LTGm, LTGm+1 ... LTGn).

14. Verfahren nach einem der vorstehenden Ansprüche,
**dadurch gekennzeichnet,**
**daß** zur Durchschaltung der Kommunikationskanäle (CC) der einen Peripheriehälfte auf die jeweils verbleibende Systemhälfte fest vorbestimmte, aus den jeweiligen Anschlußlagen und Zeitschlitzen dieser Kommunikationskanäle eindeutig bestimmbare Zeitlagen bzw. Kanalanummern auf den jeweils zu benutzenden Koppelfeld-Schnittstellen bzw. Verbindungsleitungen verwendet werden, wodurch eine Querkommunikation zur Bekanntgabe der Durchschaltung der jeweils durchgeschalteten Systemhälfte an die jeweils übernehmende Systemhälfe entfällt.

15. Verfahren nach einem der vorstehenden Ansprüche,
**dadurch gekennzeichnet,**
**daß** die zur Terminierung der Kommunikationskanäle (CC) verwendete Protokollabschlußkapazität nicht Teil der peripheren Einrichtungen (LTG1 ... LTGn) sondern Teil der zentralen Protokollabschlußkapazität (PRH) ist.

16. Verfahren nach einem der vorstehenden Ansprüche,
**dadurch gekennzeichnet,**
**daß** die Protokollabschlußkapazität beider Systemhälften (MB0, SN0, CP0, PRH0 bzw. MB1, SN1, PRH1, CP1) redundanten Zugang zu allen im redundanten Normalbetrieb erreichbaren Paketvermittlungsnetzen besitzt, und alle in den Kommunikationskanälen (CC) herangeführten ISDN Paketdaten auf diese Protokollabschlußkapazitäten der jeweils die Kommunikationskanäle (CC) der jeweils abzuschaltenden Peripheriehälfte übernehmenden Systemhälfte geschaltet werden.

## Claims

1. Method for loading software into a communications system having at least two pairs of central, mutually associated devices (CP0, CP1; MB0, MB1; SN0, SN1; PRH0, PRH1) of redundant design which respectively define a system half (SN0, MB0, CP0, PRH0) and the complementary redundant system half (SN1, MB1, CP1, PRH1) and use cross-connections (CM10, CM01) to interchange information if appropriate, and also having a plurality (n) of peripheral devices (LTG1...LTGn) which are associated with one or the remaining system half and are connected to each of the central, redundantly designed devices (SN0, SN1; MB0, MB1) associated with at least one pair of central devices by means of peripheral connections (Lij, Iij), where at least one of the peripheral devices (LTG1...LTGn) is connected to a standardized interface, particularly a V5.2 interface, which is used to supply call-processing traffic in message channels and in communication channels (CC) to the first or second system half,
**characterized**
**in that** arrival at a defined initial state is followed in a first method step by the signalling and/or information signals which are routed via peripheral devices (LTG1...LTGm; LTGm+1...LTGn) associated with one system half and are transmitted in communication channels (CC) being inserted into the message channels and being supplied via first instances of the peripheral connections (Lij) to the remaining system half, where they are forwarded to at least one peripheral device (LTGm+1...LTGn) associated with the remaining system half via second instances of the peripheral connections (Lij),
**in that**, in a second method step, the call-processing traffic still being handled by one system half is released if appropriate,
**in that**, in a third method step, the software is loaded into the system half in question and into the peripheral devices (LTG1...LTGm) associated therewith,
**in that**, in a fourth method step, the supply of the signalling and/or information signals which have been inserted into message channels and are transmitted in communication channels (CC) to the remaining system half is reversed again, thus achieving a defined intermediate state, and
**in that**, subsequently, method steps 1 to 4 are applied to the remaining system half and to the peripheral devices (LTGm+1...LTGn) associated therewith in the same way as previously to the system half in question and to the peripheral devices (LTG1...LTGm) associated therewith, the defined intermediate state being cancelled until the software has also been loaded into the peripheral devices (LTGm+1...LTGn) associated with the remaining system half as appropriate, and
**in that**, finally, the redundant mode is restored.

2. Method according to Claim 1,
**characterized in that** the number of peripheral devices (n) is even.

3. Method according to Claim 1 or 2,
**characterized**
**in that** a defined initial state is produced by thinning out the call-processing traffic as a result of existing connections being processed for the duration of their existence while new connection requests are rejected until the initial state defined by a particular criterion has been reached.

4. Method according to Claim 3,
**characterized**
**in that** the particular criterion is arrival at a prescribed time mark or possibly at a threshold value.

5. Method according to one of Claims 1 to 4,
**characterized**
**in that** the defined intermediate state is cancelled if the information interchange via the cross-connections (CM10, CM01) does not occur.

6. Method according to one of Claims 1 to 4,
**characterized**
**in that** the defined intermediate state is determined by thinning out the call-processing traffic if there is information interchange via the cross-connections (CM10, CM01).

7. Method according to one of the preceding claims,
**characterized**
**in that** the existing connections are released without prior thinning-out of the call-processing traffic.

8. Method according to one of the preceding claims,
**characterized**
**in that** the communication channels (CC) are supplied from one system half to the remaining system half via a switching matrix (SN0, SN1) in the form of a redundant pair of central devices.

9. Method according to one of the preceding claims,
**characterized**
**in that**, if an additional connection exists between two respective peripheral devices (LTGx, LTGy; 1>x>m, m+1>y>n) associated with different system halves, the communication channels (CC) are routed to the peripheral devices in question directly via these additional connections.

10. Method according to one of the preceding claims,
**characterized**
**in that** the communication channels (CC) are supplied from the respective one system half to the respective remaining system half by at least one upstream cross-connect switching apparatus.

11. Method according to one of the preceding claims,
**characterized**
**in that** the call-processing traffic is not released for local connections between two V5.2 subscribers.

12. Method according to one of the preceding claims,
**characterized**
**in that** the protocol terminating capacitance during the disconnected state of one or the remaining system half remains in an active state.

13. Method according to one of the preceding claims,
**characterized**
**in that**, if there is information interchange between the system halves, it does not take place via the cross-connections (CM10, CM01) but rather between two respective peripheral devices (LTGx, LTGy; 1>x>m, m+1>y>n) associated with different system halves via the respective operating message distributor unit (MB0, MB1) or via the additional connections between the peripheral devices associated with the two peripheral halves (LTG1...LTGm, LTGm+1...LTGn).

14. Method according to one of the preceding claims,
**characterized**
**in that** the communication channels (CC) of one peripheral half are connected to the respective remaining system half using firmly predetermined timeslots or channel numbers which can be clearly determined from the respective line locations and timeslots for these communication channels on the respective switching-matrix interfaces or connecting lines which are to be used, which means that there is no cross-communication to signal connection of the respective connected system half to the respective accepting system half.

15. Method according to one of the preceding claims,
**characterized**
**in that** the protocol terminating capacitance used for terminating the communication channels (CC) is not part of the peripheral devices (LTG1...LTGn) but rather is part of the central protocol terminating capacitance (PRH).

16. Method according to one of the preceding claims,
**characterized**
**in that** the protocol terminating capacitance of both system halves (MB0, SN0, CP0, PRH0 or MB1, SN1, PRH1, CP1) has redundant access to all packet-switching networks which can be reached in the redundant normal mode, and all ISDN packet data introduced in the communication channels (CC) are connected to these protocol terminating capacitances of the respective system half accepting the communication channels (CC) of the respective peripheral half which is to be disconnected.

## Revendications

1. Procédé pour charger des programmes dans un système de communication avec au moins deux paires d'équipements centralisés, affectés l'un à l'autre et réalisés de manière redondante (CP0, CP1 ; MB0, MB1 ; SN0, SN1 ; PRHO, PRH1), qui définissent chacun une moitié de système (SN0, MB0, CP0, PRH0) ainsi que la moitié de système (SN1, MB1, CP1, PRH1) réalisée de manière redondante par rapport à celle-ci et qui, via des liaisons transversales (CM10, CM01), échangent le cas échéant des informations, et avec une pluralité (n) d'équipements périphériques (LTG1 ... LTGn) affectés à ladite une ou ladite moitié de système restante, qui sont reliés à chacun des équipements centralisés réalisés de manière redondante (SN0, SN1 ; MB0, MB1) d'au moins une paire d'équipements centralisés via des liaisons périphériques (Lij, lij), au moins l'un des équipements périphériques (LTG1 ... LTGn) étant connecté à une interface normalisée, en particulier une interface V5.2, via laquelle un trafic de commutation est acheminé dans des canaux de données et des canaux de communication (CC) à la première ou la deuxième moitié de système,
**caractérisé en ce que**
dans une première étape du procédé, après avoir atteint un état initial défini, les signaux de signalisation et/ou d'information conduits via les équipements périphériques (LTG1 ... LTGm ; LTGm+1 ... LTGn) affectés à ladite une moitié de système et transmis dans des canaux de communication (CC) sont introduits dans les canaux de données et acheminés via des premières liaisons des liaisons périphériques (Lij) à la moitié de système restante où ils sont transférés à au moins un équipement périphérique (LTGm+1 ... LTGn) affecté à la moitié de système restante via des deuxièmes liaisons des liaisons périphériques (Lij),
**en ce que** dans une deuxième étape du procédé, le trafic de commutation encore écoulé par ladite une moitié de système est le cas échéant déclenché,
**en ce que** dans une troisième étape du procédé, le programme est chargé dans ladite une moitié de système concernée et dans les équipements périphériques (LTG1 ... LTGm) affectés à celle-ci,
**en ce que** dans une quatrième étape du procédé, l'acheminement des signaux de signalisation et/ou d'information de la moitié de système restante introduits dans des canaux de données et transmis dans des canaux de communication (CC) est à nouveau annulé, ce qui permet d'atteindre un état intermédiaire défini, et
**en ce que** par la suite les étapes 1 à 4 du procédé sont appliquées de la même façon à la moitié de système restante ainsi qu'aux équipements périphériques (LTGm+1 ... LTGn) affectés à celle-ci qu'auparavant à ladite une moitié de système concernée et aux équipements périphériques (LTG1 ... LTGm) affectés à celle-ci, l'état intermédiaire défini étant ainsi supprimé jusqu'à ce que le programme correspondant soit chargé aussi dans les équipements périphériques (LTGm+1 ... LTGn) affectés à la moitié de système restante, et
**en ce que**, pour terminer, le fonctionnement redondant est rétabli.

2. Procédé selon la revendication 1, **caractérisé en ce que** le nombre des équipements périphériques (n) est pair.

3. Procédé selon la revendication 1 ou 2, **caractérisé en ce que** l'établissement d'un état initial défini est obtenu par allègement du trafic de commutation, en traitant les liaisons existantes pour la durée de leur existence, tandis que de nouvelles demandes de liaison sont rejetées jusqu'à ce que l'état initial défini par un critère déterminé soit atteint.

4. Procédé selon la revendication 3, **caractérisé en ce que** le critère déterminé est d'atteindre une marque de temps prédéfinie ou le cas échéant une valeur seuil.

5. Procédé selon l'une des revendications 1 à 4, **caractérisé en ce qu'**en cas d'absence de l'échange d'information via les liaisons transversales (CM10, CM01), l'état intermédiaire défini est supprimé.

6. Procédé selon l'une des revendications 1 à 4, **caractérisé en ce qu'**en cas d'existence de l'échange d'information via les liaisons transversales (CM10, CM01), l'état intermédiaire défini est déterminé par allègement du trafic de commutation.

7. Procédé selon l'une des revendications précédentes, **caractérisé en ce que** les liaisons existantes sont déclenchées sans allègement préalable du trafic de commutation.

8. Procédé selon l'une des revendications précédentes, **caractérisé en ce que** l'acheminement des canaux de communication (CC) depuis ladite une moitié de système vers la moitié de système restante est effectué par un champ de couplage (SN0, SN1) configuré sous forme de paire redondante d'équipements centralisés.

9. Procédé selon l'une des revendications précédentes, **caractérisé en ce qu'**en cas d'existence d'une liaison supplémentaire entre à chaque fois deux équipements périphériques (LTGx, LTGy ; 1>x>m, m+1>y>n) affectés à des moitiés de systèmes différentes, les canaux de communication (CC) sont acheminés directement, via ces liaisons supplémentaires, auxdits équipements périphériques concernés.

10. Procédé selon l'une des revendications précédentes, **caractérisé en ce que** l'acheminement des canaux de communication (CC) depuis ladite une moitié de système vers ladite moitié de système restante est effectué par au moins un commutateur cross-connect placé en amont.

11. Procédé selon l'une des revendications précédentes, **caractérisé en ce que** pour des liaisons locales entre deux abonnés V5.2 le déclenchement du trafic de commutation est supprimé.

12. Procédé selon l'une des revendications précédentes, **caractérisé en ce que** la capacité de terminaison du protocole reste dans un état actif pendant l'état déconnecté de ladite une moitié de système resp. de ladite moitié de système restante.

13. Procédé selon l'une des revendications précédentes, **caractérisé en ce qu'**en cas d'existence de l'échange d'information entre les moitiés de système, celui-ci s'effectue non pas via les liaisons transversales (CM10, CM01) mais entre deux dispositifs périphériques (LTGx, LTGy ; 1>x>m, m+1>y>n) affectés à chaque fois à des moitiés de systèmes différentes, à chaque fois via les unités de distribution de messages (MB0, MB1) en service ou via les liaisons supplémentaires entre les dispositifs périphériques des deux moitiés de périphérique (LTG1 ... LTGm, LTGm+1 ... LTGn).

14. Procédé selon l'une des revendications précédentes, **caractérisé en ce que** pour connecter les canaux de communication (CC) de ladite une moitié de périphérique sur la moitié de système restante, on utilise des positions temporelles resp. des numéros de canal prédéterminés et susceptibles d'être déterminés de manière univoque à partir des états de connexion et créneaux temporels respectifs de ces canaux de communications sur les interfaces du champ de couplage resp. les lignes de liaison à utiliser, ce qui supprime une communication transversale pour annoncer la connexion de la moitié de système connectée sur la moitié de système la prenant en charge.

15. Procédé selon l'une des revendications précédentes, **caractérisé en ce que** la capacité de terminaison du protocole, utilisée pour terminer les canaux de communication (CC), ne fait pas partie des équipements périphériques (LTG1 ... LTGn) mais fait partie de la capacité de terminaison du protocole central (PRH).

16. Procédé selon l'une des revendications précédentes, **caractérisé en ce que** la capacité de terminaison du protocole des deux moitiés de système (MB0, SN0, CP0, PRH0 resp. MB1, SN1, PRH1, CP1) possède un accès redondant à tous les réseaux de commutation par paquets accessibles en fonctionnement normal redondant et **en ce que** toutes les données de paquets ISDN acheminées dans les canaux de communication (CC) sont connectées sur ces capacités de terminaison du protocole de la moitié de système prenant en charge les canaux de communication (CC) de la moitié de périphérique à déconnecter.
